(19) Europäisches Patentamt
European Patent Office
Office européen des brevets

(11) EP 0 960 865 A1

(12) **EUROPÄISCHE PATENTANMELDUNG**

(43) Veröffentlichungstag:
01.12.1999 Patentblatt 1999/48

(51) Int. Cl.$^6$: **C04B 24/18**, C04B 22/04

(21) Anmeldenummer: 98109439.4

(22) Anmeldetag: 25.05.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(71) Anmelder:
Chemische Werke Zell-Wildshausen GMBH
D-40549 Düsseldorf (DE)

(72) Erfinder:
• Born, Gerhard
  47800 Krefeld (DE)
• Brandt, Burkhardt
  33106 Paderborn (DE)
• Krumbiegel, Andreas, Dr. Rer. Nat.
  68169 Mannheim (DE)

(74) Vertreter:
Meyer-Roedern, Giso, Dr.
Bergheimer Strasse 10-12
69115 Heidelberg (DE)

(54) **Mittel zur Reduzierung von Chrom (VI)-Ionen in einer hydraulisch abbindenden Masse**

(57) Mittel zur Reduzierung von Chrom(VI)-Ionen in einer hydraulisch abbindenden Masse bestehend aus mindestens 0,02%Sn(II)-Ionen und aus höchstens 99,98% von nach einem elektrochemischen Verfahren erzeugter Ligninsulfosäure.

EP 0 960 865 A1

**Beschreibung**

Die 6-wertigen Chrom-Verbindungen, z. B. Chrom (VI)-Oxid, sind giftig und wirken als starke Oxidationsmittel ätzend auf Haut und Schleimhäute. Es gibt Chromat-Allergien, z. B. das bekannte Maurerekzem.

Es gibt nach dem Stand der Technik bereits Systeme, die die wasserlöslichen Verbindungen des Chrom (VI) z. B. in der Zementmatrix reduzieren sollen. Im wesentlichen basieren sie auf den reduzierenden Eigenschaften eines Kations aus den Nebengruppenelementen. Besonders hervorgehoben wurde die reduzierende Wirkung von Eisen (II)-Ionen.

Allerdings ist zu beobachten, daß Chrom (VI) nur sehr schwer in einer stark alkalischen Lösung zu reduzieren ist. So steigt nach längerer Verweilzeit die Konzentration der Chrom (VI)-Ionen wieder an. Ähnliche Effekte werden auch bei anderen Systemen beobachtet. Die eigentlichen Schwierigkeiten der Reduktion von Cr (VI)-Ionen sind folgende.

Das Redoxverhalten von Chromaten:

Die charakteristische Eigenschaft der Chromate ist ihre stark oxidierende Wirkung, da sie das große Bestreben haben, bei Zugabe oxidierbarer Stoffe in die Stufe des dreiwertigen Chroms überzugehen:

$$CrO_4^{2-} + 8\ H^+ + 3\ e^- \Leftrightarrow Cr^{3+} + 4\ H_2O$$

$$Cr_2O_7^{2-} + 14\ H^+ + 6\ e^- \Leftrightarrow 2\ Cr^{3+} + 7\ H_2O$$

Die Oxidationswirkung ist in saurer Lösung besonders hoch und nimmt mit zunehmender Basizität stark ab. Hieraus ergibt sich die Problematik der Wirksamkeit der Agenzien, die zur Chrom (VI)-Reduktion z. B. in der Zementmatrix (pH ca. 14) eingesetzt werden können.

An einem Beispiel soll gezeigt werden, weshalb mit Eisen (II)-Ionen keine dauerhafte und hinreichende Chromatreduktion bewirkt werden kann:

1.) Gleichgewichtsreaktion:

$$Fe^{2+} \Leftrightarrow Fe^{3+} + e^-$$

Das beschriebene Gleichgewicht stellt ein Elektron zur Verfügung, was zur Reduktion des Chrom (VI) zu Chrom (III) benutzt wird.

2.) Andererseits besteht zwischen Chrom (III) und Chrom (VI) folgendes Gleichgewicht:

$$2\ Cr^{3+} + 7\ H_2O \Leftrightarrow Cr_2O_7^{2-} + 14\ H^+ + 6\ e^-$$

Chrom (III)-Ionen sind sehr beständig gegen Oxidation und Reduktion in saurer Lösung, aber mit steigender Basizität nimmt diese Beständigkeit ab. Dies gilt besonders in der Zementmatrix. Das bedeutet, daß auf Grund des Gleichgewichtes eine langsame Oxidation des Chrom (III) zu Chrom (VI) stattfindet. Diese Rückreaktion kann durch die Eisenionen nicht mehr beeinflußt werden, da diese bereits bei der Applikation des $Fe(OH)_3$ ausgefallen sind. Deshalb erfüllt der Reduktor mit Eisen (II)-Ionen nicht absolut die Zielsetzung der Chromatreduktion.

Weitere Nachteile des Eisen (II) Reduktors ergeben sich bei der Anwendung. In der Praxis setzt man bei der Reduktion des Chromates in Zement Eisen (II) in Form des Sulfates ein. Da eine solche Lösung der sauren Hydrolyse unterliegen würde, setzt man es als Pulver ein. Hierbei wird durch Luftsauerstoff das Eisen (II) zu Eisen (III) überführt. Deshalb bedarf das Eisen (II)-Sulfat einer besonderen Aufmerksamkeit und besonderer Bedingungen bei der Anwendung. In der Praxis wird diese Chemikalie in wasserlösliche Tüten verpackt und dem Zementsystem durch Zugeben eingemischt. Hierbei kommt es zu zwei nachteiligen Abläufen, die dem Ziel der eindeutigen Chromatreduzierung entgegenstehen:

- Bei dieser Behandlung wird viel Fe (II) zu Fe (III) umgesetzt.
- Das Fe (II) wird eingemischt. Hierbei gibt es keine statistisch gleiche Verteilung über das gesamte System, d. h. eine exakte Dosierung ist nicht möglich. Eine weitere Kontamination mit Cr (VI)-Ionen solcher Personen, die mit diesem so behandelten Zement arbeiten, ist nicht auszuschließen.

Da bei der Gabe von Fe (III) eine signifikante Erhöhung oxidativer Basenmodifikationen in der DNA beobachtet wird, gilt Fe (III) als Tumorinduktor (Dekant, Vamvakar: Toxikologie für Chemiker und Biologen, 1994 Spektrum S: 282, 283).

Eine andere Möglichkeit zur Chromatreduzierung sind organische Systeme, wie z. B. Aldehyde, und bestimmte heterocyclische Verbindungen. So wird etwa Chrom (VI) von Menthanol zu Chrom (III) reduziert. Wirksamer ist Pyridin. Diese Substanzen können aber aus vielen Gründen nicht eingesetzt werden. Diese liegen in der Einsatzmenge, der geringen Stabilität in der Zementmatrix und toxikologischen und ökonomischen Sachverhalten.

Es wurden Überlegungen angestellt, Ligninsulfonate aus dem Zellstoffprozeß, die einerseits als Komplexbildner für Kationen, z. B. $Fe^{2+}$, dienen und andererseits aldehydische Gruppen unterschiedlichster Genese sowie Heterocyclen enthalten, als Chromatreduzierer einzusetzen.

Leider wurde festgestellt, daß Ligninsulfonate aus dem Zellstoffprozeß diese Anforderung nicht hinreichend erfüllen können, d.h., daß ihre Wirksamkeit nicht groß genug ist, um den geforderten Wert von 2 ppm Chrom (VI) zu erreichen. Der Grund hierfür liegt im Aufbau der bezeichneten Ligninsulfonate. Ligninsulfonate nach dem Zellstoffprozeß stellen ein unregelmäßiges zufälliges dreidimensionales Netzwerk dar. Hieraus resultiert, daß rein zufällig mal mehr und mal weniger aktive Gruppen an der Oberfläche des Ligninsystems vorhanden sind. Deshalb ist der Faktor, um den die Chromationen reduziert werden, nie konstant und auch in der Gesamtsumme nicht ausreichend.

Werden Ligninsulfonate aus dem Zellstoffprozeß aber durch ein elektrochemisches Verfahren behandelt, wie es aus dem deutschen Patent P 43 06 260.1-09 und dem europäischen Patent Nr. 0 687 247 (Anmeldenummer 94 90 82 58.0-2104) bekannt ist, so erhält man reproduzierbare, für diese Anwendung zugeschnittene Lignosulfosäuren (LSS). Zur Chromatreduzierung werden Lignosulfosäuren mit einer mittleren Molekularmassenverteilung von 1.000 bis 25.000 hergestellt. Die Lignosulfosäure ist so beschaffen, daß sich an der Oberfläche des Makromoleküls hauptsächlich unterschiedliche aldehydische Gruppen (nicht aromatischen und aromatischen Charakters) sowie heterocyclische und andere Carbonyl-Gruppen befinden. Diese Gruppen reduzieren Chrom (VI)-Anteile. Bei der nach den erwähnten Patenten erzeugten Lignosulfosäure sind die bezeichneten Gruppen an der Moleküloberfläche angeordnet und damit zur Chromatreduktion wirksam.

Das Lignosulfosäuresystem (LSS) ist ein vorzüglicher Dispergator und verteilt sich deshalb besonders gut z. B. in der Zementmatrix. Deshalb werden alle Chromationen erreicht und aufgrund der Molekularmassenverteilung und der hohen Anzahl reduzierender Gruppen in einem Makromolekül die Chrom (VI)-Ionen fast vollständig reduziert. Wie aus den genannten Patenten bekannt, sind die LSS-Produkte reproduzierbar.

Durch Untersuchungen wurde festgestellt, daß weder Eisen (II)-Verbindungen, noch Produkte auf Ligninsulfonatbasis oder andere bekannte Verbindungen den wasserlöslichen Gehalt von Cr (VI)-Ionen in der Zementmatrix dauerhaft und wirtschaftlich auf einen geforderten Wert kleiner 2 ppm reduzieren können.

Durch Sn (II)-Ionen ist es aber möglich, den Gehalt an wasserlöslichem Chromat z. B. in der Zementmatrix nachhaltig zu verringern und damit die Chromatwerte deutlich unter die 2 ppm-Grenze abzusenken.

Zinn II stellt ein starkes Reduktionsmittel dar, weil es das Bestreben hat, in seine vierwertige Stufe überzugehen:

$$Sn^{2+} \rightarrow Sn^{4+} + 2e^-$$

Weiterhin bildet Zinn-II in stark basischer Lösung ein amphotheres Zinn-II-Hydroxid, das auch bei sehr hohen pH-Werten seine Mobilität nicht einbüßt. Deshalb wird das Chrom VI zu Chrom III vollständig reduziert:

$$2\,Cr^{6+} + 3\,Sn^{2+} \rightarrow 2\,Cr^{3+} + 3\,Sn^{4+}$$

Tabelle

Prüfzement mit 22 ppm wasserlöslichem Chromat (Cr VI)

0,04 % Fe (II) reduziert den Chromatgehalt auf 15 ppm = Reduktionswirkung: 32%

0,04 % Sn (II) reduziert den Chromatgehalt auf 1,7 ppm = Reduktionswirkung: 92,3%

Durch den Einsatz der Lignosulfosäure (LSS) können zusätzliche synergistische Effekte bei der Chromatreduzierung in Zusammenhang mit Sn (II)-Ionen in der Zementmatrix erzielt werden. Hierdurch werden die reduzierenden Eigenschaften des Sn (II) wesentlich verbessert. Die Verbindung Zinnlignosulfosäure reduziert den wasserlöslichen Cr (VI)-Gehalt in der Zementmatrix auf 0 ppm. Weiterhin wird der durch die Chromatreduktion erzeugte Cr (III)-Gehalt im Gegensatz zu Fe (II) und deren Verbindungen über einen langen Zeitraum stabil gehalten.

Standardrezeptur:

1,6 % Sn II-Ionen
98,4 % Lignosulfosäure (LSS)

Die Dosierung der Standardrezeptur zur Senkung des Chrom (VI) Gehalts unter 2 ppm kann der nachstehenden Tabelle entnommen werden. Angegeben ist der Chromatgehalt des Zements und die Menge Standardrezeptur bezogen auf den Zementanteil.

Tabelle

| Chromatgehalt im Zement | Reduktormenge |
|---|---|
| 22 ppm | 0,45 % |
| 18 ppm | 0,38 % |
| 10 ppm | 0,2 % |
| 5 ppm | 0,1 % |

Vorteile des Sn (II) Chromatreduktorsystems:

- Sn (II) ist toxikologisch völlig unbedenklich.
- Der Einsatz als Flüssigkeit läßt eine genaue Dosierung, die auf den jeweiligen Chromatgehalt im Einzelfall abgestimmt ist, zu.
- Dauerhafte, über die ganze Matrix beständige Reduktion des Cr (VI)-Gehaltes auf einen Wert < 2 ppm.
- Die Folge ist, daß Personen beim Umgang mit Sn (II) reduktorbehandelten Stoffen nicht mehr mit Cr (VI) kontaminiert werden und somit nicht an der Chromatose erkranken.
- Der Sn (II) Reduktor kann auch bei Bedarf als Pulver eingesetzt werden.

Applikation des Sn (II) Reduktors:

Das Ziel der Bauindustrie ist es, hydraulisch oder hydraulisch latent abbindende Massen zu erzeugen. Diese Massen können aus den unterschiedlichsten Quellen mit Cr (VI)-Ionen kontaminiert sein. Im wesentlichen bestehen solche Massen aus Binder, Zuschlagsstoffen, Additiven und Wasser. Hauptsächlich sind die Kontaminationsquellen im Hüttensand und in der Flugasche zu suchen.

Der Einsatz des beschriebenen Chromatreduzierers kann auf vielfältigste Weise erfolgen. So ist es vorstellbar, daß Aerosole des Sn (II) Reduktors den Cr (VI)-Gehalt in Flugaschen reduzieren oder bei Mahlprozessen in Form einer Flüssigkeit oder eines Pulvers zum Einsatz kommen. Weiterhin kann der Sn (II) Reduktor vor Ort eingesetzt werden, d. h. direkt bei der Herstellung der hydraulisch abbindenden Massen (naß oder trocken). Der Sn (II) Reduktor kann jedem Additiv beigesetzt werden, um so einen Synergismus zu der Wirkung des Additivs zu erzeugen, nämlich den Cr (VI) Gehalt wie beschrieben zu reduzieren.

Wie immer der Sn (II) Reduktor auch appliziert wird, reagiert er mit wasserlöslichen Cr (VI)-Ionen nach der beschriebenen Weise und reduziert so dauerhaft und eindeutig den Cr (VI) Gehalt unter den vorgeschriebenen Wert von 2 ppm. Grundsätzlich ist der Sn (II) Reduktor überall dort einsetzbar, wo Cr (VI) in wasserlöslicher Form vorliegt.

Die Applikation kann in Flugaschen, Hüttensand, Zuschlagsstoffen, Mahlhilfsmittel, Binder, Additiven oder direkt bei der Herstellung z. B. im Transportbeton, Fertigteilerstellung eingesetzt werden. Grundsätzlich ist der beschriebene Chromatreduzierer überall dort verwendbar, wo wasserlösliche Cr (VI)-Ionen in einem System vorliegen, das zu einer hydraulisch abbindenden oder hydraulisch latent abbindenen Masse führt. Der Chromatreduzierer ist genau dosierbar.

**Patentansprüche**

1. Mittel zum Reduzieren von Chrom (VI)-Ionen in einer hydraulisch abbindenden Masse, dadurch gekennzeichnet, daß es mindestens 0,02 % Sn (II)-Ionen enthält.

2. Mittel nach Patentanspruch 1, dadurch gekennzeichnet, daß es aus mindestens 0,02 % Sn (II)-Ionen und aus höchstens 99,98 % Ligninsulfosäure (LSS) besteht, die nach dem elektrochemischen Verfahren des deutschen Patents P 43 06 260.1-09 oder des europäischen Patents Nr. 0 687 247 (Anmeldenummer 94 90 82 58.0-2104) erzeugt ist.

3. Mittel nach Patentanspruch 2, dadurch gekennzeichnet, daß es aus 1 bis 60 % Sn (II)-Ionen und zu Rest auf 100 % Lignosulfosäure (LSS) besteht.

4. Mittel nach Patentanspruch 2, dadurch gekennzeichnet, daß es aus 1,6 % Sn (II)-Ionen und aus 98,4 % Lignosulfosäure (LSS) besteht.

5. Mittel nach einem der Ansprüche 1 bis 4, dadurch gekennzeichnet, daß es pulverförmig ist.

6. Mittel nach einem der Ansprüche 1 bis 4, dadurch gekennzeichnet, daß es flüssig ist.

7. Verwendung eines Mittels nach einem der Patentansprüche 1 bis 6 bei der Herstellung des Bindemittels einer hydraulisch abbindenden Masse, dadurch gekennzeichnet, daß das Mittel einem Ausgangsstoff oder Zumahlstoff oder Zusatzstoff oder Mahlhilfsmittel des Bindemittels zugegeben wird, insbesondere Hüttensand oder Flugasche.

8. Verwendung eines Mittels nach einem der Patentansprüche 1 bis 6 bei der Herstellung einer hydraulisch abbindenden Trockenmasse, dadurch gekennzeichnet, daß das Mittel einem Bindemittel oder einem Zuschlag oder einem Zusatzmittel (Additiv) zugegeben wird.

9. Verwendung eines Mittels nach einem der Ansprüche 1 bis 6 beim Anmachen einer hydraulisch abbindenden Masse, dadurch gekennzeichnet, daß das Mittel einem Bindemittel oder einem Zuschlag oder einem Zusatzmittel (Additiv) oder dem Anmachwasser zugegeben wird.

Europäisches
Patentamt

**EUROPÄISCHER RECHERCHENBERICHT**

Nummer der Anmeldung

EP 98 10 9439

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | DR. HEINRICH REMY: "Lehrbuch der anorganischen Chemie, Band I" 1970 , AKADEMISCHE VERLAGSGESELLSCHAFT GEEST & PORTIG K.-G. , LEIPZIG XP002084267 * Seite 655 - Seite 657 * | 1,7 | C04B24/18 C04B22/04 |
| A | EP 0 630 869 A (DYCKERHOFF AG) 28. Dezember 1994 * Ansprüche 1,2,4,6,9,11 * | 1-9 | |
| A | PATENT ABSTRACTS OF JAPAN vol. 018, no. 371 (C-1224), 13. Juli 1994 & JP 06 100343 A (NIPPON SOLID CO LTD), 12. April 1994 * Zusammenfassung * | 1-9 | |
| A,D | DE 43 06 260 A (ZELL WILDSHAUSEN CHEM WERKE) 8. September 1994 * Ansprüche 1-5 * | 1,7 | |
| A | DD 250 924 A (ZEMENTIND RATIONALISIERUNG) 28. Oktober 1987 * das ganze Dokument * | 1-9 | RECHERCHIERTE SACHGEBIETE (Int.Cl.6) C04B |
| A | EP 0 697 380 A (ITALCEMENTI SPA) 21. Februar 1996 * Seite 2, Zeile 41 - Seite 3, Zeile 17 * | 1-9 | |
| A | WO 91 15435 A (AALBORG PORTLAND AS) 17. Oktober 1991 * Seite 1, Zeile 15 - Zeile 22 * | 1-9 | |

Der vorliegende Recherchenbericht wurde für alle Patentansprüche erstellt

| Recherchenort | Abschlußdatum der Recherche | Prüfer |
|---|---|---|
| MÜNCHEN | 13. November 1998 | Mini, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

ANHANG ZUM EUROPÄISCHEN RECHERCHENBERICHT
ÜBER DIE EUROPÄISCHE PATENTANMELDUNG NR.

EP 98 10 9439

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-11-1998

| Im Recherchenbericht angeführtes Patentdokument | Datum der Veröffentlichung | Mitglied(er) der Patentfamilie | | Datum der Veröffentlichung |
|---|---|---|---|---|
| EP 0630869 A | 28-12-1994 | DE | 4321077 A | 05-01-1995 |
| | | AT | 148434 T | 15-02-1997 |
| | | CZ | 9401543 A | 18-01-1995 |
| | | DE | 59401688 D | 13-03-1997 |
| | | DK | 630869 T | 17-02-1997 |
| | | ES | 2102100 T | 16-07-1997 |
| | | GR | 3022781 T | 30-06-1997 |
| | | HU | 67949 A | 29-05-1995 |
| | | LT | 1952 A,B | 31-01-1995 |
| | | LV | 11316 A | 20-06-1996 |
| | | LV | 11316 B | 20-12-1996 |
| | | PL | 303961 A | 09-01-1995 |
| | | SK | 76194 A | 08-02-1995 |
| DE 4306260 A | 08-09-1994 | AT | 165585 T | 15-05-1998 |
| | | CA | 2157394 A | 15-09-1994 |
| | | WO | 9420419 A | 15-09-1994 |
| | | DE | 59405847 D | 04-06-1998 |
| | | EP | 0687247 A | 20-12-1995 |
| | | ES | 2118389 T | 16-09-1998 |
| | | FI | 954089 A | 31-08-1995 |
| | | NO | 953397 A | 30-08-1995 |
| | | US | 5725748 A | 10-03-1998 |
| DD 250924 A | 28-10-1987 | KEINE | | |
| EP 0697380 A | 21-02-1996 | IT | 1274718 B | 24-07-1997 |
| WO 9115435 A | 17-10-1991 | AT | 139987 T | 15-07-1996 |
| | | AU | 647118 B | 17-03-1994 |
| | | AU | 7671091 A | 30-10-1991 |
| | | CA | 2080379 A | 12-10-1991 |
| | | DE | 69120672 D | 08-08-1996 |
| | | DE | 69120672 T | 06-03-1997 |
| | | DK | 524999 T | 28-10-1996 |
| | | EP | 0524999 A | 03-02-1993 |
| | | FI | 924585 A | 09-10-1992 |
| | | IE | 76464 B | 22-10-1997 |
| | | US | 5362321 A | 08-11-1994 |

EPO FORM P0461

Für nähere Einzelheiten zu diesem Anhang : siehe Amtsblatt des Europäischen Patentamts, Nr.12/82